# EUROPÄISCHE PATENTSCHRIFT

(11) **EP 0 744 060 B1**
(45) Veröffentlichungstag und Bekanntmachung des Hinweises auf die Patenterteilung: **29.08.2001**
(21) Anmeldenummer: 95941695.9
(22) Anmeldetag: 07.12.1995
(51) Int. Cl.: G06K 19/07, G06K 19/073

(54) **DATENTRÄGER MIT ELEKTRONISCHEM MODUL**
DATA CARRIER WITH ELECTRONIC MODULE
SUPPORT DE DONNEES A MODULE ELECTRONIQUE

(30) Priorität: 08.12.1994 DE 4443766
(43) Veröffentlichungstag der Anmeldung: 27.11.1996
(73) Patentinhaber: Giesecke & Devrient GmbH, 81677 München (DE)
(72) Erfinder: MOLL, Jürgen, D-82054 Sauerlach (DE); WEIKMANN, Franz, D-81675 München (DE); LAMLA, Michael, D-80935 München (DE)
(74) Vertreter: Klunker . Schmitt-Nilson . Hirsch
(86) Internationale Anmeldenummer: EP9504822
(87) Internationale Veröffentlichungsnummer: WO9618172

(56) Entgegenhaltungen:
- EP-A- 0 262 036
- EP-A- 0 292 658

## Beschreibung

Die Erfindung betrifft ein elektronisches Modul, das einen integrierten Schaltkreis mit einer Steuereinheit und mit mindestens einem Speicher zur Speicherung von Daten sowie Mittel zur Kommunikation des integrierten Schaltkreises mit externen Vorrichtungen umfaßt.

Bereits seit längerem sind Datenträger bekannt, die mit elektronischen Modulen der oben genannten Art ausgerüstet sind, z.B. aus der EP 0 426 163 A1. Datenträger dieser Art werden in zunehmendem Maße für geldwerte Anwendungen, z.B. als Telefonkarte, Autobahngebührenkarte, elektronische Börse etc. verwendet. In diesem Fall wird der Speicher des integrierten Schaltkreises des elektronischen Moduls unter anderem zur Aufzeichnung von Transaktionsdaten und zur Speicherung des aktuellen Guthabens nach einer Transaktion benutzt. Der aus der EP-A-0 426 163 bekannte Datenträger enthält neben dem elektronischen Modul mit einem derart genutzten Speicher auch noch ein nichtflüchtiges Display, das mit dem elektronischen Modul in Verbindung steht und in der Oberfläche des Datenträgers liegt. Mit diesem Display wird das jeweilige Guthaben angezeigt und bei jeder Transaktion unter Steuerung der Steuereinrichtungen des elektronischen Moduls des Datenträgers aktualisiert. Kommt es zu einer mechanischen Zerstörung des elektronischen Moduls und sind somit die Daten aus dem Speicher des Moduls nicht mehr auslesbar, so ist zumindest das aktuelle Guthaben des Datenträgers noch im Display sichtbar und kann an den Inhaber des funktionstüchtigen Datenträgers ausgezahlt werden.

Aus der EP-A-0 292 658 ist ein Datenträger bekannt, der über ein elektronisches Modul verfügt, welches einen integrierten Schaltkreis, Kommunikationsmittel zur Kommunikation mit einer externen Einrichtung sowie mindestens zwei gesonderte nichtflüchtige Speicher aufweist, denen eine Kontrolleinheit zugeordnet ist. In die beiden Speicher wird identisch jeweils eine betriebswesentliche Information eingeschrieben. Bei Nutzung des Datenträgers prüft die Kontrolleinheit die Übereinstimmung der in den beiden Speichern vorhandenen Informationen, Abweichungen werden als Manipulationsversuch gedeutet. Das Dokument EP-A- 292 658 offenbart die Merkmale des Oberbegriffs von Anspruch 1.

Bei bekannten Datenträgern der oben genannten Art besteht grundsätzlich das Problem, daß bei einer unbeabsichtigten oder in betrügerischer Absicht vorgenommenen Zerstörung des integrierten Schaltkreises bzw. bei einer Beeinträchtigung seiner Funktion keine Möglichkeit besteht, den tatsächlichen Datenbestand des integrierten Schaltkreises und damit beispielsweise das aktuelle Guthaben zu ermitteln. Die die Karten ausgebende Institution ist insoweit auf die Behauptung des Kartenbenutzers angewiesen.

So ist zur Verhinderung einer betrügerischen Manipulation der aus der EP-A-0 426 163 bekannte Vorschlag unzureichend, da es in diesem Fall vergleichsweise einfach möglich ist, ohne Zerstörung des integrierten Schaltkreises bzw. des Moduls die Verbindung zwischen dem Modul und dem Display zu unterbrechen, so daß die Aktualisierung des Guthabens im Display über das elektronische Modul nicht mehr erfolgen kann, das elektronische Modul selbst aber funktionstüchtig bleibt. Danach kann derDatenträger in betrügerischer Absicht, wie oben erläutert, genutzt werden. Praktisch wird eine betrügerische Nutzung in einem gewissen Umfang sogar erleichtert, da das Display dazu benutzt werden kann, ein tatsächlich nicht mehr vorhandenes Guthaben vorzutäuschen.

Die in EP-A-0 292 658 vorgeschlagene Lösung wirkt zwar unmittelbar wirksamen Manipulationen am integrierten Schaltkreis entgegen, verhindert aber nicht Betrugsversuche dadurch, daß das elektronische Modul zunächst z.B. mechanisch so beschädigt wird, daß ein normaler Zugriff auf die gespeicherten Daten nicht mehr möglich ist und anschließend vermeintlich auf einem Datenträger vorhandene Wertdaten geltend gemacht werden.

Es ist deshalb Aufgabe der Erfindung, ein für Datenträger geeignetes elektronisches Modul vorzuschlagen, aus dem Daten auch noch ausgelesen werden können, wenn das Modul funktionsgestört ist.

Die Aufgabe wird gemäß den Merkmalen des Hauptanspruchs gelöst.

Der Grundgedanke der Erfindung ist darin zu sehen, daß in dem elektronischen Modul zusätzlich mindestens eine elektronische Kontrolleinheit vorgesehen ist, deren Fläche im Verhältnis zur Fläche des integrierten Schaltkreises des Moduls klein ist und die einen nichtflüchtigen Speicher, in den Daten eingeschrieben werden, und alle Mittel enthält, die ein Auslesen des nichtflüchtigen Speichers über eine separate Schnittstelle erlauben. Vorzugsweise ist die elektronische Kontrolleinheit integraler Bestandteil des Schaltkreises des Moduls und derart plaziert, daß sie bei einem Bruch des integrierten Schaltkreises außerhalb von Vorzugsbruchlinien liegt. Weiterhin können Schutzelemente, beispielsweise Schutzdioden oder Sicherungen, vorgesehen sein, die die Kontrolleinheit gegen Überspannungen und/oder Überströme absichern.

Die mit der Erfindung erzielten Vorteile sind insbesondere darin zu sehen, daß ein mit einem erfindungsgemäßen elektronischen Modul ausgestatteter Datenträger nicht in einfacher Art und Weise betrügerisch nutzbar ist, da die elektronische Kontrolleinheit Bestandteil des elektronischen Moduls ist und somit die Verbindung vom Schaltkreis zur elektronischen Kontrolleinheit nicht gezielt unterbrochen werden kann. Dennoch können aus der elektronischen Kontrolleinheit auch bei Bruch des integrierten Schaltkreises des Moduls noch Daten ausgelesen werden. Schließlich braucht für die elektronische Kontrolleinheit kein zusätzlicher Platz auf der Kartenoberfläche zur Verfügung gestellt werden. Ein weiterer Vorteil besteht darin, daß bei einer Zerstörung des Schaltkreises, beispielsweise durch eine mechanische oder elektrische Einwirkung von außen oder generell bei einer Beeinträchtigung der Funktion des Schaltkreises infolge eines Hardwarefehlers oder eines logischen Fehlers, eine hohe Wahrscheinlichkeit dafür besteht, daß die Kontrolleinheit noch funktionsfähig ist und ausgelesen werden kann.

Gemäß einem ersten Ausführungsbeispiel der Erfindung liegt innerhalb der elektronischen Kontrolleinheit ein nichtflüchtiger Speicher, der über ebenfalls in der elektronischen Kontrolleinheit liegende Kontaktflächen berührend ausgelesen werden kann. Der nichtflüchtige Speicher kann in diesem und den weiteren Ausführungsbeispielen z.B. als EEPROM-Speicher ausgebildet sein.

Gemäß einem weiteren Ausführungsbeispiel liegt innerhalb der elektronischen Kontrolleinheit ein nichtflüchtiger Speicher und ein Digital-Analog-Wandler, mit dessen Hilfe die gespeicherten digitalen Daten in ein analoges Signal umgewandelt und bestimmt werden können.

Schließlich besteht auch die Möglichkeit, den nichtflüchtigen Speicher der Kontrolleinheit beispielsweise mittels einer Spule berührungslos auszulegen oder in der Kontrolleinheit andere Hilfsmittel vorzusehen, über die der Inhalt des nichtflüchtigen Speichers von außen zugänglich ist.

Die elektronische Kontrolleinheit kann auch als separate Einheit ausgebildet sein, die vorzugsweise mit dem integrierten Schaltkreis Teil des elektronischen Moduls ist.

Weitere Vorteile und Ausführungsbeispiele der Erfindung werden im Zusammenhang mit den nachstehenden Figuren erläutert. Darin zeigen:
- Fig. 1: einen Datenträger in Aufsicht,
- Fig. 2: den integrierten Schaltkreis des elektronischen Moduls,
- Fig. 3: eine elektronische Kontrolleinheit,
- Fig. 4: eine elektronische Kontrolleinheit,
- Fig. 5: eine elektronische Kontrolleinheit,
- Fig. 6: eine elektronische Kontrolleinheit.

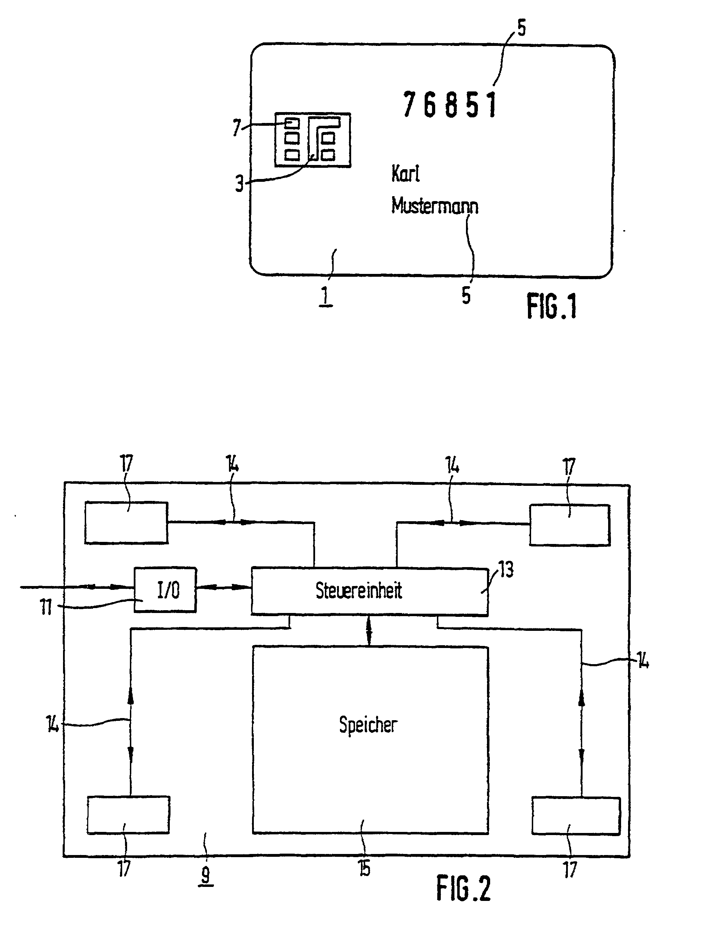

Fig. 1 zeigt einen Datenträger 1 in Form einer IC-Karte mit einem elektronischen Modul 3 für den berührenden Datenaustausch in Aufsicht. Sowohl die Außenabmessungen der IC-Karte als auch die Lage des elektronischen Moduls sind in einer Norm festgelegt. Auf der Kartenoberfläche der IC-Karte 1 können je nach Anwendung der Karte alphanumerische Daten 5 vorhanden sein, die z.B. den Namen des Karteninhabers etc. bezeichnen. Das elektronische Modul 3 enthält einen integrierten Schaltkreis, der leitend mit den Kommunikationsmitteln, im gezeigten Beispiel also mit den Kontaktflächen 7, verbunden ist. Der Schaltkreis und die leitenden Verbindungen vom Schaltkreis zu den Kontaktflächen sind zum Schutz vor mechanischen Belastungen üblicherweise mit einer Gußmasse vergossen. Der Anwendungsbereich der Erfindung ist nicht auf die in Fig. 1 dargestellte IC-Karte mit Kontaktflächen beschränkt. Die Erfindung kann in gleicher Weise auch bei IC-Karten mit nichtberührender Kopplung eingesetzt werden, bei denen der Datenaustausch beispielsweise über eine in der IC-Karte angeordnete Spule erfolgt.

Fig. 2 zeigt den integrierten Schaltkreis 9 des elektronischen Moduls, der eine serielle Dateneingabe-/ausgabe-Schnittstelle 11, eine Steuereinheit 13 und einen Speicher 15 enthält. Die Steuereinheit 13 kann entweder als festverdrahtete Einheit oder aber als Mikroprozessor vorliegen. Die genannten Elemente und ihr Zusammenwirken sind an sich bekannt und brauchen deshalb nicht näher erläutert zu werden.

Der Speicher 15 ist als nichtflüchtiger Speicher ausgebildet und in ihm werden während einer Transaktion mit dem Datenträger die Transaktionsdaten eingeschrieben. Kommt es zu einem Funktionsausfall des integrierten Schaltkreises, so können keine Daten mehr aus dem Speicher 15 ausgelesen werden. Insbesondere durch einen Bruch des Schaltkreises können seine üblichen Bestandteile, wie z.B. die Steuereinheit 13 und der Speicher 15 mechanisch zerstört werden und sind somit nicht mehr zugänglich. Ebenso ist es denkbar, daß der Schaltkreis durch unzulässig hohe Ströme oder Spannungen beschädigt wird. Der Schaltkreis könnte auch dadurch in seiner Funktion beeinträchtigt werden, daß eine seiner Komponenten beispielsweise infolge eines Materialfehlers oder alterungsbedingt ausfällt oder eine Verbindung unterbrochen wird. Es besteht prinzipiell auch die Möglichkeit eines logischen Fehlers, bei dem sich der Chip beispielsweise infolge eines Manipulationsversuchs in einem logischen Zustand befindet, in dem ein ordnungsgemäßer Betrieb nicht mehr möglich ist. Es ist daher auf dem integrierten Schaltkreis erfindungsgemäß mindestens eine elektronische Kontrolleinheit 17 vorgesehen, deren Fläche im Vergleich zur Fläche des Schaltkreises 9 klein ist und die somit bei einem Bruch des integrierten Schaltkreises höchstwahrscheinlich unversehrt bleibt. Das Verhältnis der Fläche des integrierten Schaltkreises 9 zu der elektronischen Kontrolleinheit 17 liegt etwa in dem Bereich 50 : 1 bis 10 : 1. In der elektronischen Kontrolleinheit 17 werden während einer ordnungsgemäßen Kommunikation des Datenträgers mit einem externen Gerät unter Steuerung der Steuereinheit 13 über die dazu notwendigen Leitungen 14 Daten eingeschrieben bzw. ausgelesen. Bei einem Funktionsausfall des integrierten Schaltkreises können die Daten über eine separate Schnittstelle zumindest ausgelesen werden.

Die Wahrscheinlichkeit, daß die elektronische Kontrolleinheit 17 bei einem Bruch des Schaltkreises unversehrt bleibt, kann dadurch erhöht werden, daß man sie außerhalb der Vorzugsbruchlinien des integrierten Schaltkreises plaziert. Zusätzlich können, wie es in der Fig. 2 bereits gezeigt ist, auch mehrere elektronische Kontrolleinheiten 17 vorgesehen werden, so daß mindestens eine dieser Einheiten bei einem Bruch des integrierten Schaltkreises mit sehr großer Wahrscheinlichkeit unversehrt bleibt. Die Leitungen 14 und gegebenenfalls weitere Leitungen zwischen der Kontrolleinheit 17 bzw. den Kontrolleinheiten 17 und Komponenten des Schaltkreises 9 können mit geeigneten Schutzelementen, beispielweise Sicherungen und/oder Schutzdioden versehen sein, um die Kontrolleinheit bzw. die Kontrolleinheiten 17 vor unzulässig hohen Strömen und/oder Spannungen zu schützen.

In der Fig. 2 ist die elektronische Kontrolleinheit 17 als integraler Bestandteil des Schaltkreises 9 gezeigt. Hierbei handelt es sich um ein bevorzugtes Ausführungsbeispiel, da es in diesem Fall fast ausgeschlossen ist, die Leitungen 14 von der Steuereinheit 9 zu der elektronischen Kontrolleinheit 17 gezielt zu unterbrechen, selbst dann, wenn der Schaltkreis 9 nicht von einer Gußmasse umgeben ist. Es ist jedoch auch möglich, die elektronische Kontrolleinheit 17 als separaten integrierten Schaltkreis auszubilden, der über die Leitungen 14 mit dem Schaltkreis 9 verbunden ist. In diesem Fall ist es vorteilhaft, die elektronische Kontrolleinheit 17 in unmittelbarer Nähe des Schaltkreises zu plazieren, so daß eine gezielte Unterbrechung der Verbindung nur nach Entfernen der Gußmasse möglich ist, die die empfindlichen Bestandteile des Moduls üblicherweise umgibt. Die betrügerische Manipulation wäre somit offensichtlich. Selbstverständlich ist auch die separate elektronische Kontrolleinheit 17 so klein ausgebildet, daß sie bei einer mechanischen Belastung des elektronischen Moduls, die zu einem Bruch des integrierten Schaltkreises 9 führt, höchstwahrscheinlich unversehrt bleibt.

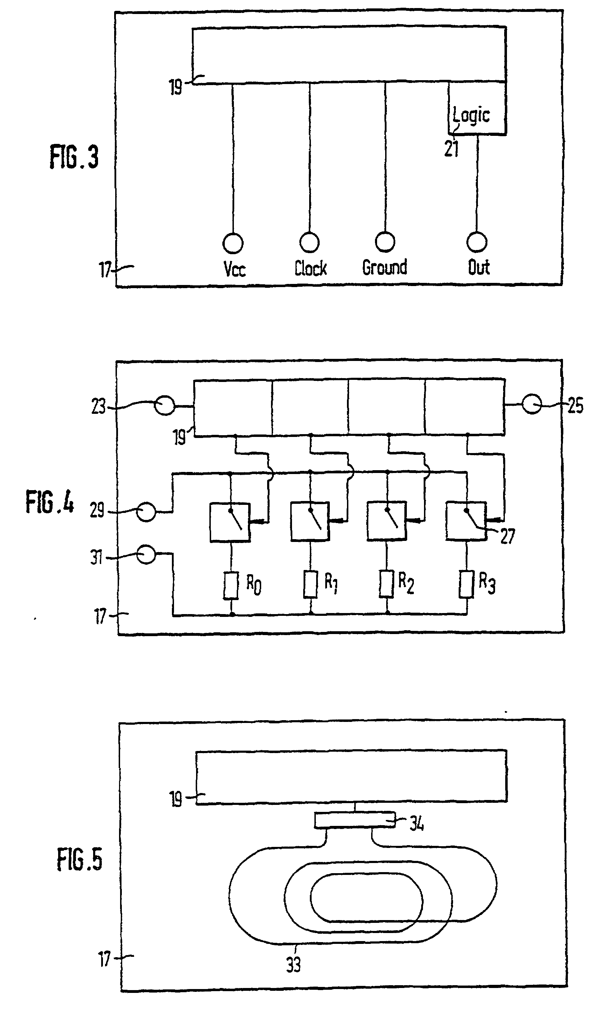

Die Fig. 3 bis 6 zeigen Ausführungsbeispiele der elektronischen Kontrolleinheit 17. Generell enthält die elektronische Kontrolleinheit einen nichtflüchtigen Speicherbereich 19, in dem über die in den Fig. 3 bis 6 nicht gezeigten Leitungen 14 während des normalen Betriebs Daten eingeschrieben bzw. aus diesem ausgelesen werden. Vorzugsweise werden nur wichtige Daten gespeichert, um den Platzbedarf des Speichers und damit den Platzbedarf der elektronischen Kontrolleinheit gering zu halten. Soll z.B. ausschließlich der jüngste Datensatz oder Teile des jüngsten Datensatzes (z.B. das aktuelle Guthaben) gespeichert werden, genügen bereits wenige Speicherzellen. Darüber hinaus verfügt die elektronische Kontrolleinheit 17 generell über separate Mittel, mit deren Hilfe ein Zugang zu dem nichtflüchtigen Speicher auch dann noch möglich ist, wenn der übliche Schreib-/Lesezugang zu der elektronischen Kontrolleinheit 17 über die Steuereinheit 13 des Schaltkreises (siehe Fig. 2) nicht mehr möglich ist. Die elektronische Kontrolleinheit 17 ist also ein autarker Bereich, aus dem Daten unabhängig von der Funktionstüchtigkeit der übrigen Bestandteile des integrierten Schaltkreises 9 (siehe Fig. 2) zumindest noch ausgelesen werden können.

Ein Einschreiben von Daten in den Speicherbereich 19 über die separate Schnittstelle ist bei den gezeigten Beispielen nicht möglich, da z.B. die Programmierspannung über die separate Schnittstelle nicht angelegt werden kann. Dies hat den Vorteil, daß die gespeicherten Daten nicht in betrügerischer Absicht verändert werden können. Selbstverständlich kann die separate Schnittstelle bei Bedarf auch so ausgestaltet werden, daß ein Einschreiben von Daten in den Speicher 19 über diese möglich ist.

Fig. 3 zeigt eine elektronische Kontrolleinheit 17, die ähnlich dem integrierten Schaltkreis 9 aufgebaut ist. Sie verfügt also über einen nichtflüchtigen Speicherbereich 19, eine Steuerlogik 21 und über separate Kontaktflächen für den Masseanschluß "Ground", die Versorgungsspannung "V_{CC}", den Taktanschluß "Clock" und für das Auslesen von Daten "Out".

Bei Bedarf können die Daten aus dem Speicherbereich 19 über die separaten Kontaktflächen ausgelesen werden, indem man von dem elektronischen Modul die Gußmasse entfernt und an die Kontaktflächen die entsprechenden Signale bzw. Spannungen anlegt. Das Auslesen der Daten aus dem Speicherbereich 19 wird dann von der Steuerlogik 21 gesteuert, die den Speicherbereich adressiert, die aus dem Speicher ausgelesenen Daten zwischenspeichert und an die serielle Ausgabeschnittstelle "Out" weiterleitet.

Fig. 4 zeigt eine elektronische Kontrolleinheit 17 mit einem Speicherbereich 19, dessen Inhalt mit Hilfe eines Digital-Analog-Wandlers bestimmbar ist. In dem gezeigten Beispiel ist der Digital-Analog-Wandler als eine Parallelschaltung von Widerständen aufgebaut. Der Strompfad über die einzelnen Widerstände wird abhängig von dem Inhalt der Speicherzellen geschaltet. Dazu wird über die gezeigten Kontaktflächen 23 und 25 die zum Auslesen notwendige Spannung an den Speicherbereich 19 angelegt und das an der Ausleseleitung einer Speicherzelle anliegende Signal wird zur Schaltung eines Strompfades genutzt, d.h. bei einem Speicherzelleninhalt von logisch "1" wird der entsprechende Strompfad geschlossen, wohingegen er bei einem Speicherinhalt von logisch "0" offenbleibt. Die Schaltfunktion der Speicherzellen ist in der Figur durch die Schalter 27 angedeutet. Weisen nunmehr die Widerstände R₀ bis Rᵢ unterschiedliche eindeutige Werte (z.B., R₀; R₁ = 2R₀; R₂ = 4R₀...; R₁ = 2ⁱ R₀; hierbei ist "i" die Anzahl der Speicherzellen) auf, so hat die Parallelschaltung der Widerstände abhängig von den geschlossenen Strompfaden einen unterschiedlichen Gesamtwiderstand, der durch den Speicherinhalt des Speicherbereichs 19 eindeutig bestimmt ist. Legt man also an die Kontaktflächen 29 und 31 ebenfalls eine definierte Spannung an, so fließt abhängig von den geschlossenen Strompfaden ein Strom, der eine Funktion des Speicherinhalts ist. Eine Strommessung erlaubt also die eindeutige Bestimmung des Speicherinhalts des Speicherbereichs 19.

Die den Speicherzellen zugeordneten Widerstände lassen sich, wie dem Fachmann an sich bekannt, in Halbleitertechnik realisieren und können somit bereits bei der Herstellung des integrierten Schaltkreises 9 bzw. der elektronischen Kontrolleinheit 17 einfach in diesem vorgesehen werden.

Fig. 5 zeigt eine elektronische Kontrolleinheit 17, bei der der Speicherbereich 19 berührungslos auslesbar ist. Dies kann beispielsweise dadurch realisiert werden, daß man in der elektronischen Kontrolleinheit 17 eine Spule 33 und eine Steuerlogik 34 vorsieht, mit deren Hilfe die Daten aus dem Speicherbereich 19, wie an sich bekannt, über eine externe Vorrichtung auslesbar sind. Ein berührungslos durch eine externe Vorrichtung auslesbarer Speicherbereich 19 hat den Vorteil, daß das Entfernen der Gußmasse, die den integrierten Schaltkreis des elektronischen Moduls gegebenenfalls umgibt, vor dem Auslesen nicht notwendig ist.

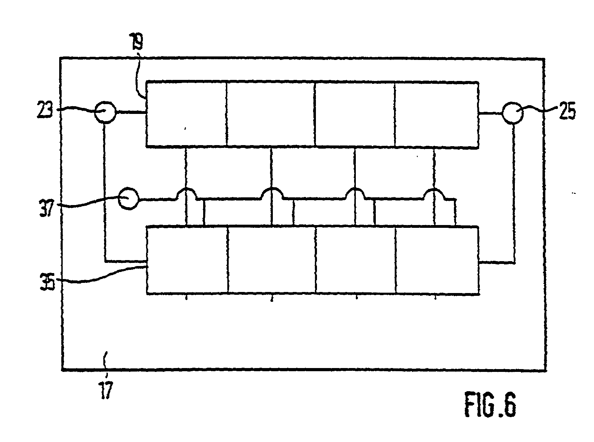

Fig. 6 zeigt eine elektronische Kontrolleinheit 17, deren Speicherinhalt mittels einer Hilfseinrichtung 35 bestimmbar ist. Die Hilfseinrichtung 35 kann beispielsweise eine Reihe von Leuchtdioden (LED) aufweisen, wobei jede LED einer Speicherzelle des nichtflüchtigen Speichers 19 zugeordnet ist und abhängig vom Inhalt der Speicherzelle leuchtet oder nicht leuchtet. Die dafür benötigte Versorgungsspannung kann an die Kontaktflächen 23 und 25 angelegt werden.

In einer anderen Ausführungsform weist die Hilfseinrichtung 35 einen RAM-Speicher 35 auf, der genau so viele Speicherzellen enthält, wie der Speicherbereich 19. Bei Anlegen der notwendigen Versorgungsspannung an die Kontaktflächen 23 und 25 wird der Inhalt des Speicherbereichs 19 in den RAM-Speicher 35 kopiert. Hierzu wird an jede Speicherzelle des RAMs über die Kontaktfläche 37 ein Taktsignal angelegt, wodurch der an dem Datenausgang der nichtflüchtigen Speicherzelle anliegende Dateninhalt in die RAM-Speicherzelle übertragen wird. Die in den RAM-Speicher 35 übertragenen Daten können nunmehr auf einfache Art und Weise mit Hilfe eines Elektronenmikroskops bestimmt und in eine optische Information umgewandelt werden, da die Ladungsmenge in den Speicherzellen, die den Dateninhalt bestimmt, in einer RAM-Speicherzelle relativ groß ist.

Abschließend sei gesagt, daß die elektronische Kontrolleinheit 17 auch auf andere Art und Weise realisiert werden kann. Erfindungsgemäß ist die elektronische Kontrolleinheit 17 jedoch immer Bestandteil des elektronischen Moduls 3 und verfügt über separate Mittel, mit deren Hilfe der Speicherinhalt des in der elektronischen Kontrolleinheit liegenden Speichers zumindest auslesbar ist.

## Patentansprüche

1. Elektronisches Modul mit einem eine Steuereinheit und mindestens einen Speicher zur Speicherung von Daten aufweisenden integrierten Schaltkreis, Mitteln zur Durchführung einer Kommunikation zwischen dem integrierten Schaltkreis und einer externen Vorrichtung, sowie einer elektronischen Kontrolleinheit, die im Vergleich zur Fläche des integrierten Schaltkreises klein ist und die wenigstens einen nichtflüchtigen Speicher enthält, **dadurch gekennzeichnet**, daß
- der nichtflüchtige Speicher (19) der elektronischen Kontrolleinheit (17) unabhängig vom Speicher (15) des integrierten Schaltkreises (9) auslesbar ist,
- in den nichtflüchtigen Speicher (19) der elektronischen Kontrolleinheit (17) während des normalen Betriebes wichtige Daten zusätzlich gespeichert werden,
- und die elektronische Kontrolleinheit (17) über alle Mittel (21 bis 35) verfügt, um ein Auslesen der in dem nichtflüchtigen Speicher (19) enthaltenen Daten zu ermöglichen.

2. Elektronisches Modul nach Anspruch 1, **dadurch gekennzeichnet**, daß die elektronische Kontrolleinheit (17) Bestandteil des integrierten Schaltkreises (9) des elektronischen Moduls (3) ist.

3. Elektronisches Modul nach Anspruch 2, **dadurch gekennzeichnet**, daß die elektronische Kontrolleinheit (17) auf dem Schaltkreis (9) so angeordnet ist, daß sie im Falle eines Brechens des integrierten Schaltkreises (9) mit hoher Wahrscheinlichkeit unversehrt bleibt.

4. Elektronisches Modul nach einem der Ansprüche 1 bis 3, **dadurch gekennzeichnet**, daß die elektronische Kontrolleinheit (17) durch Schutzelemente vor unzulässig hohen Strömen und/oder Spannungen geschützt ist.

5. Elektronisches Modul nach einem der Ansprüche 1 bis 4, **dadurch gekennzeichnet**, daß die elektronische Kontrolleinheit (17) mehrfach vorgesehen ist.

6. Elektronisches Modul nach einem der Ansprüche 1 bis 5, **dadurch gekennzeichnet**, daß in den nichtflüchtigen Speicher (19) der elektronischen Kontrolleinheit (17) jeweils der jüngste Datensatz oder Teile des jüngsten Datensatzes gespeichert werden, der oder die im Zuge einer Kommunikation des integrierten Schaltkreises (9) mit einer externen Vorrichtung entstehen.

7. Elektronisches Modul nach einem der Ansprüche 1 bis 6, **dadurch gekennzeichnet**, daß die Daten über die in der elektronischen Kontrolleinheit (17) liegenden Mittel (21 bis 35), mit deren Hilfe ein Auslesen der in dem nichtflüchtigen Speicher (19) gespeicherten Daten möglich ist, aus. dem nichtflüchtigen Speicher (19) nur auslesbar sind.

8. Elektronisches Modul nach einem der Ansprüche 1 bis 7, dadureh **gekennzeichnet**, daß innerhalb der elektronischen Kontrolleinheit (17) eine Steuerlogik (21) und Anschlüsse für die Masse, für die Versorgungsspannung, für ein Taktsignal und für eine Datenausgabe vorhanden sind.

9. Elektronisches Modul nach einem der Ansprüche 1 bis 7, **dadurch gekennzeichnet**, daß innerhalb der elektronischen Kontrolleinheit (17) ein Digital-Analog-Wandler (23 bis 31) liegt, mit dessen Hilfe die in dem nichtflüchtig Speicher (19) gespeicherten Daten in ein analoges Signal umwandelbar sind.

10. Elektronisches Modul nach einem der Ansprüche 1 bis 7, **dadurch gekennzeichnet,** daß innerhalb der elektronischen Kontrolleinheit (17) Mittel (33, 34) liegen, die ein berührungsloses Auslesen der in dem nichtflüchtigen Speicher gespeicherten Daten ermöglichen.

11. Elektronisches Modul nach einem der Ansprüche 1 bis 7, **dadurch gekennzeichnet**, daß die elektronische Kontrolleinheit (17) Leuchtdioden (35) aufweist, mit deren Hilfe die in dem nichtflüchtigen Speicher (19) gespeicherten Daten Auslesbar sind.

12. Elektronisches Modul nach einem der Ansprüche 1 bis 7, **dadurch gekennzeichnet,** daß die im nichtflüchtigen Speicher (19) der elektronischen Kontrolleinheit (17) gespeicherten Daten in einen weiteren Speicher (35) der elektronischen Kontrolleinheit (17) übertragbar sind und mittels eines Elektronenmikroskops aus diesem weiteren Speicher (35) auslesbar sind.

13. Datenträger **gekennzeichnet** durch ein elektronisches Modul (3) gemäß einem der Ansprüche 1 bis 12.

## Claims

1. An electronic module comprising an integrated circuit with a control unit and at least one memory for storing data, means for performing communication between the integrated circuit and an external apparatus, and an electronic check unit which is small in comparison to the surface of the integrated circuit and which contains at least one nonvolatile memory, **characterized in that**
- the nonvolatile memory (19) of the electronic check unit (17) is readable independently of the memory (15) of the integrated circuit (9),
- important data are stored additionally in the nonvolatile memory (19) of the electronic check unit (17) during normal operation, and
- the electronic check unit (17) has all means (21 to 35) for permitting readout of the data contained in the nonvolatile memory (19).

2. An electronic module according to claim 1, **characterized in that** the electronic check unit (17) is part of the integrated circuit (9) of the electronic module (3).

3. An electronic module according to claim 2, **characterized in that** the electronic check unit (17) is disposed on the circuit (9) so as to remain intact with high probability in case the integrated circuit (9) breaks.

4. An electronic module according to any of claims 1 to 3, **characterized in that** the electronic check unit (17) is protected from inadmissibly high currents and/or voltages by protective elements.

5. An electronic module according to any of claims 1 to 4, **characterized in that** a plurality of electronic check units (17) are provided.

6. An electronic module according to any of claims 1 to 5, **characterized in that** the latest data record or parts of the latest data record arising in the course of communication of the integrated circuit (9) with an external apparatus are stored in the nonvolatile memory (19) of the electronic check unit (17).

7. An electronic module according to any of claims 1 to 6, **characterized in that** the data are only readable from the nonvolatile memory (19) via the means (21 to 35) located in the electronic check unit (17) which permit readout of the data stored in the nonvolatile memory (19).

8. An electronic module according to any of claims 1 to 7, **characterized in that** a control logic (21) and connections for ground, for supply voltage, for a clock signal and for data output are present within the electronic check unit (17).

9. An electronic module according to any of claims 1 to 7, **characterized in that** a digital-to-analog converter (23 to 31) is located within the electronic check unit (17) for converting the data stored in the nonvolatile memory (19) to an analog signal.

10. An electronic module according to any of claims 1 to 7, **characterized in that** means (33, 34) are located within the electronic check unit (17) which permit noncontacting readout of the data stored in the nonvolatile memory.

11. An electronic module according to any of claims 1 to 7, **characterized in that** the electronic check unit (17) has light-emitting diodes (35) for reading the data stored in the nonvolatile memory (19).

12. An electronic module according to any of claims 1 to 7, **characterized in that** the data stored in the nonvolatile memory (19) of the electronic check unit (17) are transferable to a further memory (35) of the electronic check unit (17) and readable from said further memory (35) by means of an electron microscope.

13. A data carrier characterized by an electronic module (3) according to any of claims 1 to 12.

## Revendications

1. Module électronique avec :
- un circuit de commutation intégré présentant un module de commande et au moins une mémoire pour mémoriser des données ;
- des moyens pour effectuer une communication entre le circuit de commutation intégré et un dispositif externe ;
- ainsi qu'une unité de contrôle électronique, qui est petite en comparaison de la surface du circuit de commutation intégré et qui comprend au moins une mémoire non volatile
**caractérisé en ce que**
- la mémoire non volatile (19) de l'unité de contrôle électronique (17) est extractible indépendamment de la mémoire (15) du circuit de commutation intégré (9) ;
- d'importantes données sont mémorisées en plus dans la mémoire (19) non volatile de l'unité de contrôle électronique (17) pendant le fonctionnement normal, ; et
- l'unité de contrôle électronique (17) dispose de tous les moyens (21 à 35) pour rendre possible une extraction des données comprises dans la mémoire non volatile (19).

2. Module électronique selon la revendication 1, **caractérisé en ce que** l'unité de contrôle électronique (17) est une composante du circuit de commutation intégré (9) du module électronique (3).

3. Module électronique selon la revendication 2, **caractérisé en ce que** l'unité de contrôle électronique (17) est agencée sur le circuit de commutation (9) de telle façon que l'unité de contrôle (17) reste avec une grande probabilité intacte en cas de rupture du circuit de commutation intégré (9).

4. Module électronique selon l'une des revendications 1 à 3, **caractérisé en ce que** l'unité de contrôle électronique (17) est protégée par des éléments de protection contre de hauts courants et/ou tensions inadmissibles.

5. Module électronique selon l'une des revendications 1 à 4, **caractérisé en ce que** de multiples unités de contrôle électronique (17) sont prévues.

6. Module électronique selon l'une des revendications 1 à 5, **caractérisé en ce que**, dans la mémoire non volatile (19) de l'unité de contrôle électronique (17) est enregistré à chaque fois l'ensemble de données le plus récent ou une partie de l'ensemble de données le plus récent, qui apparaissent au cours d'une communication du circuit de commutation intégré (9) avec un dispositif externe.

7. Module électronique selon l'une des revendications 1 à 6, **caractérisé en ce que** les données ne sont extraites de la mémoire non volatile (19) que par les moyens (21 à 35) se trouvant dans l'unité de contrôle électronique (17), moyens avec l'aide desquels une extraction des données enregistrées dans la mémoire non volatile (19) est possible.

8. Module électronique selon l'une des revendications 1 à 4, **caractérisé en ce qu**'une logique de commande (21) et des prises pour la masse, pour la tension d'alimentation, pour un signal de synchronisation et pour une sortie de données, sont disponibles à l'intérieur de l'unité de contrôle (17) électronique.

9. Module électronique selon l'une des revendications 1 à 7, **caractérisé en ce qu**'un convertisseur numérique-analogique (23 à 31) est à l'intérieur de l'unité de contrôle électronique (17), convertisseur à l'aide duquel les données mémorisées dans la mémoire non volatile (19) sont transformables en un signal analogique.

10. Module électronique selon l'une des revendications 1 à 7, **caractérisé en ce que** des moyens (33, 34) sont à l'intérieur de l'unité de contrôle électronique (17), les moyens permettant une extraction sans contact des données enregistrées dans la mémoire non volatile.

11. Module électronique selon l'une des revendications 1 à 7, **caractérisé en ce que** l'unité de contrôle électronique (17) présente des diodes luminescentes (35), à l'aide desquelles les données mémorisées dans la mémoire non volatile (19) sont extractibles.

12. Module électronique selon l'une des revendications 1 à 7, **caractérisé en ce que** les données mémorisées dans la mémoire non volatile (19) de l'unité de contrôle électronique (17) sont transmissibles dans une autre mémoire (35) de l'unité de contrôle électronique (17) et sont extractibles de cette autre mémoire (35) à l'aide d'un microscope électronique.

13. Support de données caractérisé par un module électronique (3) selon l'une des revendications 1 à 12.
